**Europäisches Patentamt**

**European Patent Office**

**Office européen des brevets**

(19)

(11) Publication number : **0 360 593 B1**

(12) # EUROPEAN PATENT SPECIFICATION

(45) Date of publication of patent specification :
**03.03.93 Bulletin 93/09**

(51) Int. Cl.⁵ : **C04B 38/06, // F01N3/02**

(21) Application number : **89309582.8**

(22) Date of filing : **20.09.89**

(54) **Method of producing porous ceramic honeycomb structural bodies.**

(30) Priority : **21.09.88 JP 235082/88**

(43) Date of publication of application :
**28.03.90 Bulletin 90/13**

(45) Publication of the grant of the patent :
**03.03.93 Bulletin 93/09**

(84) Designated Contracting States :
**BE DE FR GB GR IT SE**

(56) References cited :
**EP-A- 0 278 750**
**DE-A- 3 541 372**
**FR-A- 2 417 481**
**US-A- 3 940 301**

(73) Proprietor : **NGK INSULATORS, LTD.**
**2-56, Suda-cho, Mizuho-ku**
**Nagoya City Aichi Pref. (JP)**

(72) Inventor : **Hamaguchi, Kunikazu**
**15 Takeda-Cho 2-Chome Mizuho-Ku**
**Nagoya City Aichi Pref. (JP)**
Inventor : **Harada, Takashi**
**248, Ohari 1-Chome Meito-Ku**
**Nagoya City Aichi Pref. (JP)**
Inventor : **Hamanaka, Toshiyuki**
**682-1 Minamiwakamatsu-Cho**
**Suzuka City Mie Pref. (JP)**
Inventor : **Miyahara, Kazuhiro**
**201 NGK Minamikazoku Apartm. 15**
**Takeda-Cho 2-Chome**
**Mizuho-Ku Nagoya City Aichi Pref. (JP)**

(74) Representative : **Paget, Hugh Charles Edward**
**et al**
**MEWBURN ELLIS & CO. 2/3 Cursitor Street**
**London EC4A 1BQ (GB)**

EP 0 360 593 B1

## Description

The present invention relates to a method of producing porous ceramic honeycomb structural bodies especially for use as diesel particulate filters for collecting particulates contained in exhaust gas from a diesel engine, e.g. for automobiles.

Hitherto, in a method of producing porous ceramic honeycomb structural bodies used as a diesel particulate filter, powder of ceramic raw material having a predetermined chemical composition is mixed with a pore forming agent and then kneaded to make an extrudable batch body. The batch body is extruded to shape green bodies and then dried and fired to obtain porous ceramic honeycomb structural bodies.

For example, Japanese Patent Application Publication No. 60-31800 discloses a method of producing porous ceramic honeycomb structural bodies having a high dimensional accuracy by using graphite powder as an extruding lubricant and further discloses pore forming effects provided by the graphite powder. Also, Japanese Patent Application Publication No. 63-27303 (U.S. Patent No. 4279849) discloses a method of producing cordierite ceramic honeycomb structural bodies by using starch powder and pore forming effects provided by the starch powder.

Moreover, it has been proposed to use coke or carbon powder as the pore forming agent, but the burning characteristics of such a coke and carbon powder in the firing process and the characteristics of ceramic honeycomb structural bodies produced by using the coke an carbon power have not been clarified.

However, it was found that when the graphite powder is used as the pore forming agent, it is necessary to keep the ceramic honeycomb structural bodies at about 1000°C for a long time in the firing process to completely burn the graphite powder because of a property of non-inflammability of the graphite powder and as a result a long firing time is required. Moreover, under a rapid heating condition in the firing process, there sometimes occur unburned residues of the pore forming agent in the central portion of the fired honeycomb structural bodies and melt defects caused by violent burning of the unburned residues of the graphite powder at a high firing temperature. Such disadvantages are particularly noted in producing of large diesel particulate filters.

Moreover, when the coke powder which is a kind of the carbon powder is used as the pore forming agent, the coefficient of thermal expansion of the produced ceramic honeycomb structural bodies becomes high owing to the great amount of impurities included in the coke powder and further when the coke powder is used together with the cordierite raw material, the orientation of particles of the cordierite raw material becomes wrong, since the coke powder has a rounded configuration, and as a result the coefficient of thermal expansion is high. When the starch powder such as wheat flour is used as the pore forming agent, if the amount of starch powder is large, firing breakage occurs and the control of firing condition is difficult and further the kneaded bodies are violently rotted if a condition of the kneaded bodies is not proper.

It is an object of the present invention to eliminate the above mentioned drawbacks and to provide an improved method of producing porous ceramic honeycomb structural bodies for shortening the firing time and also obtaining a high yield.

According to the present invention, there is provided a method of producing porous ceramic honeycomb structural bodies as set out in claim 1.

By using the flammable carbon power defined in claim 1 as the pore forming agent according to the present invention, the retention time at about 1000°C for burning the pore forming agent can be shortened. As a result, the firing time can be shortened without rapid heating. Accordingly, there can be prevented the defect of unburned residue of the pore forming agent caused by the rapid heating and the melt defect caused by violent burning of the unburned agent at a high temperature.

It is preferable that the amount of addition of the flammable carbon powder to the ceramic raw material is 15~30 parts by weight, because if the amount of addition of the flammable carbon powder is less than 15 parts by weight, then the pressure loss of the filter may be large to decrease the collecting time, resulting in inferior characteristics of the diesel particulate filter and if the amount of addition of the flammable carbon powder is more than 30 parts by weight, then the strength of the filter may decrease and the firing time may greatly increase so that the unburned residues of the carbon powder often occur in the central portions of honeycomb structural bodies under the rapid heating condition, resulting in defective honeycomb structural bodies.

It is further preferable that the grain size of the carbon powder is 20~100μm in average particle diameter, because if the grain size is smaller than 20 μm, the diameter of the pores may be small and the ratio of fine pores is increased, resulting in a high pressure loss and short particulate collecting time and if the grain size is larger than 100 μm, the diameter of the pores may be large and as a result the particulate collecting efficiency of the porous ceramic honeycomb structural body drops, degrading the function of the filter.

The carbon powder preferably has a chemical composition containing CaO and KNaO in amounts of not more than 0.1 wt%, respectively, since when the impurities contained in the carbon powder increase, the coef-

2

ficient of thermal expansion of the honeycomb structural bodies becomes higher. Furthermore, it is preferable that the carbon powder has a flat configuration having an aspect ratio not less than 2, since when the carbon powder is particularly used together with the cordierite raw material, the particles of the raw material are not sufficiently orientated by using a carbon powder having an aspect ratio lower than 2, resulting in a high coefficient of thermal expansion of the honeycomb structural bodies.

For a better understanding of features of the invention reference is made to the attached drawing, wherein:

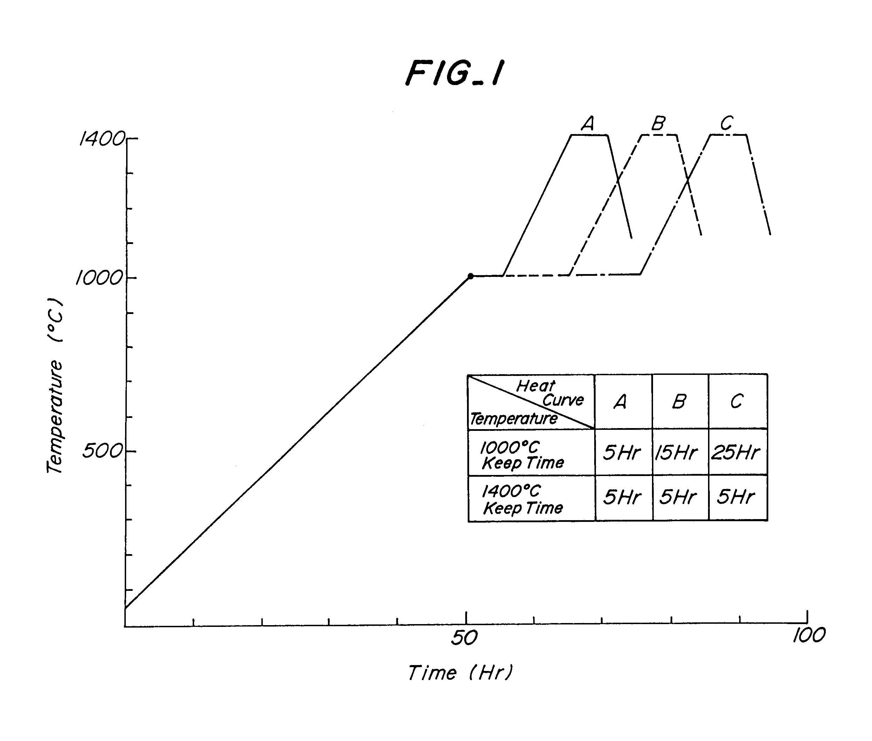

Fig. 1 is a diagram illustrating a firing condition used in an example of the present invention.

In the following, an example of the present invention will be explained. This example is merely given in illustration of the invention and should not be interpreted into limit the scope of the invention.

Example

To 100 parts by weight of cordierite powder raw material having a chemical composition consisting of, as main components, $SiO_2$ 42-56 wt%, $A\ell_2O_3$ 30~45 wt% and MgO 12-16 wt% were added a pore forming agent having properties shown in Table 1 in an amount of addition shown in Table 2, 4 parts by weight of methyl cellulose and water as plasticizing medium. The resulting mixed raw material is kneaded to prepare extrudable batch bodies. Each batch body was extruded in a conventional manner to produce a cylindrical honeycomb structural body having an outer diameter of 230 mm, a height of 305 mm and a partition wall thickness of 430 μm with the number of cells being 16/cm². The porous ceramic honeycomb structural bodies obtained from each batch were dried and fired in various firing conditions shown in Fig. 1, in which $O_2$ concentration in air was controlled to be about 10% during the retention time since burning of the pore forming agent is affected by the $O_2$ concentration. The characteristics of the thus fired honeycomb structural bodies such as occurrence of cracks in fired bodies and occurrence of melt defects in the central portion of the fired bodies (defects caused by burning of the pore forming agent) were observed and the coefficient of thermal expansion at a temperature in 16 a range of 40°~800°C was estimated. The results of the estimation is shown in Table 2. The carbon powders of Table 1 are crystalline carbon powder.

EP 0 360 593 B1

Table 1

| Pore forming agent | Degree of loss in weight % after heat treatment at 650°C×1 Hr *1 (%) | Chemical composition (wt%) | | | Aspect ratio | Average particle diameter *2 (μm) |
|---|---|---|---|---|---|---|
| | | Ig.loss | CaO | KNaO | | |
| Carbon powder A | 50 | 99.8 | 0.02 | 0.02 | 3 | 50 |
| Carbon powder B | 80 | 99.7 | 0.05 | 0.03 | 2.5 | 60 |
| Carbon powder C | 90 | 99.5 | 0.1 | 0.1 | 2 | 40 |
| Carbon powder D | 90 | 99.5 | 0.1 | 0.1 | 2 | 20 |
| Carbon powder E | 90 | 99.5 | 0.1 | 0.1 | 2 | 100 |
| Carbon powder F | 40 | 99.8 | 0.02 | 0.01 | 3 | 40 |
| Starch powder | 97 | 99.8 | 0.01 | 0.01 | 1.5 | 90 |
| Graphite | 10 | 99.8 | 0.02 | 0.01 | 3.5 | 40 |
| Coke | 97 | 98.5 | 0.5 | 0.2 | 1.5 | 40 |

*1 In air

*2 According to JIS Standard dry screening method

Table 2(a)

| Test No. | | Pore forming agent | Amount of pore forming agent addition to cordierite raw material (wt%) | Characteristics of sintered body | | | | | | | | | General estimation |
|---|---|---|---|---|---|---|---|---|---|---|---|---|---|
| | | | | Firing condition Ⓐ | | | Firing condition Ⓑ | | | Firing condition Ⓒ | | | Shortening of firing time and Degree of superior quality characteristics |
| | | | | Cracking in sintered body | Melted fault in central portion of sintered body | Coefficient of thermal expansion ($\times 10^{-6}$/°C) | Cracking in sintered body | Melted fault in central portion of sintered body | Coefficient of thermal expansion ($\times 10^{-6}$/°C) | Cracking in sintered body | Melted fault in central portion of sintered body | Coefficient of thermal expansion ($\times 10^{-6}$/°C) | |
| 1 | Invention | carbon powder A | 20 | none | none | 0.9 | none | none | 0.9 | none | none | 1.0 | good |
| 2 | " | " B | " | " | " | 0.9 | " | " | 1.0 | " | " | 1.1 | " |
| 3 | " | " C | " | " | " | 1.0 | " | " | 1.0 | " | " | 1.0 | " |
| 4 | " | " D | " | " | " | 1.1 | " | " | 1.1 | " | " | 1.1 | " |
| 5 | " | " E | " | " | " | 1.0 | " | " | 1.1 | " | " | 1.1 | " |
| 6 | " | " A | 15 | " | " | 0.9 | " | " | 1.0 | " | " | 1.0 | " |
| 7 | " | " C | " | " | " | 1.0 | " | " | 1.0 | " | " | 1.1 | " |
| 8 | " | " A | 30 | " | " | 0.9 | " | " | 0.9 | " | " | 1.0 | " |
| 9 | " | " C | " | " | " | 1.0 | " | " | 1.0 | " | " | 1.1 | " |

EP 0 360 593 B1

## Table 2(b)

| Test No. | | Pore forming agent | Amount of pore forming agent addition to cordierite raw material (wt%) | Characteristics of sintered body | | | | | | | | | General estimation |
|---|---|---|---|---|---|---|---|---|---|---|---|---|---|
| | | | | Firing condition Ⓐ | | | Firing condition Ⓑ | | | Firing condition Ⓒ | | | Shortening of firing time and Degree of superior quality characteristics |
| | | | | Cracking in sintered body | Melted fault in central portion of sintered body | Coefficient of thermal expansion ($\times 10^{-6}$/°C) | Cracking in sintered body | Melted fault in central portion of sintered body | Coefficient of thermal expansion ($\times 10^{-6}$/°C) | Cracking in sintered body | Melted fault in central portion of sintered body | Coefficient of thermal expansion ($\times 10^{-6}$/°C) | |
| 10 | Comparative example and prior art | starch powder | 20 | big crack | none | 1.1 | big crack | none | 1.2 | big crack | none | 1.2 | bad (crack) |
| 11 | " | graphite | " | non | large melted fault | 0.9 | non | large melted fault | 0.9 | non | small melted fault | 1.0 | bad (long firing time melted fault) |
| 12 | " | coke | " | " | none | 1.8 | " | none | 1.8 | " | none | 2.0 | bad (heat expansion up) |
| 13 | " | carbon powder F | " | " | small melted fault | 0.9 | " | " | 0.9 | " | " | 1.0 | fair (melted fault) |

From the results shown in Table 1, Table 2 and Fig. 1, it is appreciated that in the heat treatment wherein the honeycomb structural bodies were kept at 650°C for one hour in air according to the method of the present invention, by using the flammable carbon powder having a degree of loss in weight of 50% or more, the retention time at 1000°C for burning the pore forming agent can be shortened to thereby greatly shorten the firing time and as a result superior quality characteristics of the honeycomb structural bodies are obtained. On the other hand, when the starch powder of prior art was used as the pore forming agent, the burning was sufficient, but cracks were occurred and the quality characteristics was deteriorated. Also, when the graphite powder was used as the pore forming agent, the burning was wrong and a long retention time at 1000°C was required, moreover in a case of short retention time, the unburned residue of graphite powder was violently burned at a high temperature and the temperature is raised and as a result considerable melt faults were generated in the central portions of the honeycomb structural bodies. Furthermore, when the coke was used as the pore forming agent, the burning was sufficient, but because of much impurities, the orientation of the cordierite raw material was deteriorated and as a result the coefficient of thermal expansion was greatly increased.

Although the invention has been described in the above example with respect to use of the cordierite raw material as the ceramic raw material, but other material such as mullite, aluminum titanate and the like may be used to attain the similar firing time shortening effect according to the present invention.

It is seen from the above description that according to the method of producing the porous honeycomb structural bodies of the present invention, by using carbon powder having the prescribed properties, the firing time can be shortened without the unburned residue of the pore forming agent and the melt fault caused by violent burning of the pore forming agent and as a result superior porous honeycomb structural bodies for diesel particulate filters can be obtained.


## Claims

1. A method of producing a porous ceramic honeycomb structural body comprising the steps of mixing powder of ceramic raw material with a pore forming agent, kneading the mixture, extruding the kneaded mixture into a shaped green body and then drying and firing the green body, characterized in that said pore forming agent is a flammable carbon powder having a degree of loss in weight of 50% or more after a heat treatment at 650°C for one hour in air.

2. A method as claimed in claim 1, wherein the amount of the flammable carbon powder added to the ceramic raw material is in the range 15 to 30 parts by weight per 100 parts of ceramic raw material.

3. A method as claimed in claim 1 or claim 2, wherein the grain size of the carbon powder is in the range 20 to 100 μm in average particle diameter.

4. A method as claimed in any one of claims 1 to 3, wherein the carbon powder has a chemical composition containing CaO and KNaO in amounts of not more than 0.1 wt%, respectively.

5. A method as claimed in any one of claims 1 to 4, wherein the carbon powder has a flat configuration having an aspect ratio not less than 2.

6. A diesel engine exhaust filter containing as a filter body a honeycomb structural body made by the method of any one of claims 1 to 5.


## Patentansprüche

1. Verfahren zur Herstellung eines porösen Keramikkörpers mit Bienenwabenstruktur, umfassend die Schritte des Mischens von Pulver aus Keramikrohmaterial mit einem Porenbildungsmittel, des Knetens der Mischung, des Extrudierens der gekneteten Mischung in einen grünen Formkörper und dann des Trocknens und Brennens des grünen Körpers, dadurch gekennzeichnet, daß das genannte Porenbildungsmittel ein brennbares Kohlenstoffpulver mit einem Ausmaß an Gewichtsverlust von 50% oder mehr nach einer Wärmebehandlung bei 650°C für eine Stunde in Luft ist.

2. Verfahren nach Anspruch 1, worin die Menge des zum Keramikrohmaterial hinzugefügten brennbaren Kohlenstoffpulvers im Bereich von 15 bis 30 Gew.-Teile pro 100 Gew.-Teile Keramikrohmaterial beträgt.

3. Verfahren nach Anspruch 1 oder 2, worin die Korngröße des Kohlenstoffpulvers im Bereich von 20 bis 100 μm als durchschnittlicher Teilchendurchmesser beträgt.

4. Verfahren nach einem der Ansprüche 1 bis 3, worin das Kohlenstoffpulver eine chemische Zusammensetzung aufweist, die CaO und KNaO in Mengen von nicht mehr als jeweils 0,1 Gew.-% enthält.

5. Verfahren nach einem der Ansprüche 1 bis 4, worin das Kohlenstoffpulver eine flache Konfiguration mit einem Längenverhältnis von nicht weniger als 2 aufweist.

6. Dieselmotor-Abgasfilter, der als einen Filterkörper einen nach dem Verfahren nach einem der Ansprüche 1 bis 5 hergestellten Bienenwabenstrukturkörper enthält.


**Revendications**

1. Procédé de fabrication d'une structure en nid d'abeille en céramique poreuse comprenant les étapes de mélanger une poudre de matière première céramique avec un agent de formation de pores, de pétrir le mélange, d'extruder le mélange pétri pour former un corps cru mis en forme et d'ensuite sécher et cuire le corps cru, **caractérisé en ce que** ledit agent de formation de pores est une poudre inflammable de carbone présentant un taux de perte de poids élevé, de 50 % au plus, après un traitement thermique à 650°C pendant une heure dans l'air.

2. Procédé selon la revendication 1, dans lequel la quantité de poudre inflammable de carbone ajoutée à la matière première de céramique se situe dans la plage de 15 à 30 parties en poids pour 100 parties de matière première céramique.

3. Procédé selon la revendication 1 ou la revendication 2, dans lequel la granulométrie de la poudre de carbone présente un diamètre moyen de particules situé entre 20 et 100 μm.

4. Procédé selon l'une quelconque des revendications 1 à 3, dans lequel la poudre de carbone utilisée possède une formulation chimique contenant CaO et KNaO en teneurs non supérieures à 0,1 % en poids, respectivement.

5. Procédé selon l'une quelconque des revendications 1 à 4, dans lequel la poudre de carbone possède une configuration aplatie possédant un facteur de forme non inférieur à 2.

6. Filtre à gaz d'échappement de moteur diesel contenant comme élément de filtre une structure en nid d'abeille fabriquée par le procédé de l'une quelconque des revendications 1 à 5.

FIG. 1

| Heat Curve Temperature | A | B | C |
|---|---|---|---|
| 1000°C Keep Time | 5Hr | 15Hr | 25Hr |
| 1400°C Keep Time | 5Hr | 5Hr | 5Hr |

Temperature (°C)

1400

1000

500

Time (Hr)

50

100